# EUROPEAN PATENT APPLICATION

(11) **EP 4 307 216 A1**
(43) Date of publication of application: **17.01.2024**
(21) Application number: 21930363.3
(22) Date of filing: 20.12.2021
(51) Int. Cl.: G06T 7/00, G06N 20/00, G01N 21/88

(54) **INTEGRATED MODEL GENERATION METHOD, IMAGE INSPECTION SYSTEM, IMAGE INSPECTION MODEL GENERATION DEVICE, IMAGE INSPECTION MODEL GENERATION PROGRAM, AND IMAGE INSPECTION DEVICE**

(30) Priority: 12.03.2021 JP 2021039796
(71) Applicant: OMRON Corporation, Kyoto 600-8530 (JP)
(72) Inventor: KATO, Yutaka, Kyoto-shi, Kyoto 600-8530 (JP); KURITA, Masashi, Kyoto-shi, Kyoto 600-8530 (JP)
(74) Representative: Bardehle Pagenberg Partnerschaft mbB Patentanwälte Rechtsanwälte
(86) International application number: PCT/JP2021/046910
(87) International publication number: WO 2022/190518

(57) **Abstract**

An inspection model adapted to an environment of a site is generated with a lighter learning workload. A plurality of first element models different from each other in the specific feature are prepared. A second model is generated by adjusting at least one of the plurality of first element models to adapt to adjustment data different from training data of the model. From a set of element models including the plurality of first element models and the second element model, a plurality of the element models including at least one of the second element models are selected. An integrated model is generated by integrating the plurality of the element models selected. The integrated model outputs any of classes into which input data is classified. The class is a class into which the input data is classified based on presence or absence of all of a plurality of the specific features related to the plurality of the element models selected.

## Description

### TECHNICAL FIELD

The present invention relates to an integrated model generation method, an image inspection system, an image inspection model generation device, an image inspection model generation program, and an image inspection device.

### BACKGROUND ART

On a site such as a factory for manufacturing products, an image capturing a target such as a product or a component has been input to a learning model to inspect, for example, the quality of the target based on data output from the learning model. The learning model used for inspection as described above includes a model to be trained in advance and a model to be trained on-site. The model to be trained in advance can reduce learning workload on the site, but poses a problem in that adaptation to the site is difficult and thus has low inspection accuracy. In contrast, the model to be trained on-site poses a problem in that the model has a high learning workload for adaptation to the site.

For improvement of inspection accuracy, for example, PTL 1 listed below discloses a selection support device that selects a learning model to be used for inspection among a plurality of learning models optimized on a per material basis, and determines whether a specified material is included in a target to be inspected using the selected learning model. For improvement of capability of the learning models, for example, PTL 2 listed below discloses a model integration device that collects learning models of each site, and integrates results of machine learning reflected in integration ranges each of which is set in a common portion of a corresponding learning model.

### CITATION LIST

### PATENT LITERATURE

PTL 1: JP 2019-174421 A
PTL 2: JP 2020-115311 A

### SUMMARY OF INVENTION

### TECHNICAL PROBLEM

However, in PTL 1, the learning model needs to be generated for each material, and needs to be generated for each site according to the environment of a site (an example of a domain), and thus the learning model has a high learning workload at the site. In PTL 2, the models trained at the sites are merely integrated, which is insufficient to reduce the learning workload of a learning model at each site while the learning model is adapted to the site.

The present invention is made in view of the circumstances as described above, and has an object to provide an integrated model generation method, an image inspection system, an image inspection model generation device, an image inspection model generation program, and an image inspection device that allow an inspection model adapted to an environment of a site to be generated with a lower learning workload.

### SOLUTION TO PROBLEM

An integrated model generation method according to an aspect of the present invention includes: preparing a plurality of first element models, subjected to machine learning, for receiving input of input data and outputting presence or absence of a specific feature in the input data or a likelihood of the presence or the absence, different ones of the plurality of first element models being different from each other in the specific feature; generating a second element model by adjusting at least one of the plurality of first element models to adapt to adjustment data different from training data used for training the at least one of the plurality of first element models; selecting, from a set of element models including the plurality of first element models and the second element model, a plurality of the element models including at least one of the second element models and at least one of the element models other than the at least one of the plurality of first element models which is a basis for generating the at least one second element model; and generating an integrated model by integrating the plurality of the element models selected. The integrated model is a model for classifying data input to the integrated model into a plurality of classes, the integrated model being a model for outputting a class of the plurality of classes to which the input data belongs, or a model for outputting a likelihood that the input data belongs to a specific class of the plurality of classes. Each of the plurality of classes is not a class corresponding to presence or absence of a specific feature related to one of the plurality of the element models selected, but a class into which the input data is classified based on presence or absence of all of a plurality of the specific features related to the plurality of the element models selected or the likelihood of the presence or the absence.

According to the aspect, at least one of the plurality of first element models different from each other in the specific feature is adjusted to adapt to the adjustment data different from the training data of the first element models to generate the second element models, the plurality of element models including at least one second element model are selected from the set of element models including the first element models and the second element models, and the plurality of selected element models are integrated, thus allowing the integrated model to be generated. In addition, the generated integrated model can output the class into which input data is classified or the likelihood that the input data is classified into any of the classes, based on presence or absence of all of the specific features related to the plurality of selected element models or the likelihood of the presence or the absence of all of the specific features. In other words, domain adaptation can be performed for each element model, and in addition, the plurality of element models responding to features different from each other are integrated to enable generation of the integrated model that can perform comprehensive determination, rather than presence or absence of the feature to which each element model responds.

In the aspect, generating the second element model may correspond to adjusting, through machine learning by using the adjustment data, the at least one of the plurality of first element models which is a basis for generating the at least one second element model.

According to the aspect, the first element model of a certain domain is subjected to machine learning to adapt to the adjustment data obtained in a domain of the second element model, thus allowing the second element model to be generated.

In the aspect, a first element model of the plurality of first element models adjusted to generate the at least one second element model may include a plurality of feature extraction units, a feature amount correction unit configured to correct a feature amount vector of which element is a feature amount output by each of the plurality of feature extraction units, and an identification unit configured to calculate an analysis result related to whether the specific feature related to the first element model is included, based on the feature amount vector corrected by the feature amount correction unit. Generating the second element model may correspond to setting an amount of correction performed by the feature amount correction unit such that a representative value of the feature amount vector regarding training data used for training the first element model, after the feature amount vector is corrected by the feature amount correction unit, approximates a representative value of a feature amount vector regarding the adjustment data more than a representative value to be corrected.

According to the aspect, the second element model can be generated by correcting the representative value of the feature amount vector regarding the training data in the first element model of a certain domain to approximate to the representative value of the feature amount vector regarding the adjustment data obtained in a domain of the second element model.

In the aspect, the input data may be image data obtained by capturing an image of a target, and the specific feature may be a categorized feature that exhibits an individual difference in external appearance of the target.

According to the aspect, the image data obtained by capturing an image of the target is input to allow the second element model to be generated, the second element model extracting the categorized feature that exhibits an individual difference in external appearance of the target.

In the aspect, each of the plurality of classes related to output of the integrated model may be a class corresponding to a quality level of a target.

According to the aspect, the integrated model can output the class corresponding to the quality level of the target.

In the aspect, the plurality of first element models each may further output a location at which the specific feature is present.

According to the aspect, the location at which the specific feature is present can be recognized.

An image inspection system according to another aspect of the present invention includes: a first element model access unit configured to access a plurality of first element models, subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models being different from each other in the specific feature; a second element model generation unit configured to generate a second element model by adjusting at least one of the plurality of first element models to adapt to adjustment data different from training data used for training the at least one of the plurality of first element models; a selection unit configured to receive a specification of a plurality of element models, the plurality of element models being selected from a set of element models including the plurality of first element models and the second element model, and the plurality of element models including at least one of the second element models and at least one of the plurality of element models other than the at least one of the plurality of first element models which is a basis for generating the at least one second element model; an integrated model generation unit configured to generate an integrated model by integrating the plurality of element models selected, the integrated model outputting a determination result as to whether the target of the image data input to the integrated model is a non-defective item; an image acquisition unit configured to acquire target image data obtained by capturing an image of the target to be inspected; and an inspection execution unit configured to obtain a determination result as to whether the target is a non-defective item by inputting the target image data acquired to the integrated model and executing the integrated model.

According to the aspect, at least one of the plurality of first element models different from each other in the specific feature is adjusted to adapt to the adjustment data different from the training data of the first element models to generate the second element models, the plurality of element models including at least one second element model is selected from the set of element models including the first element models and the second element models, and the plurality of selected element models are integrated, thus allowing the integrated model to be generated. In addition, the determination result as to whether the target is the non-defective item can be obtained by inputting the target image data to the generated integrated model. In other words, domain adaptation can be performed for each element model, and in addition, the plurality of element models responding to features different from each other are integrated to enable generation of the integrated model that can perform comprehensive determination.

In the aspect, the second element model generation unit may generate the second element model by adjusting, through machine learning by using the adjustment data, the at least one of the plurality of first element models which is a basis for generating the at least one second element model

According to the aspect, the first element model of a certain domain is subjected to machine learning to adapt to the adjustment data obtained in a domain of the second element model, thus allowing the second element model to be generated.

In the aspect, the at least one of the plurality of first element models adjusted to generate the at least one second element model may include a plurality of feature extraction units, a feature amount correction unit configured to correct a feature amount vector of which element is a feature amount output by each of the plurality of feature extraction units, and an identification unit configured to calculate analysis results related to whether or not the specific feature related to the at least one of the plurality of first element models is included, based on the feature amount vector corrected by the feature amount correction unit. The second element model generation unit may generate the second element model by setting an amount of correction performed by the feature amount correction unit such that a representative value of the feature amount vector regarding training data used for training the first element model, after the feature amount vector is corrected by the feature amount correction unit, approximates a representative value of a feature amount vector regarding the adjustment data more than a representative value before the feature amount vector is corrected.

According to the aspect, the second element model can be generated by correcting the representative value of the feature amount vector regarding the training data in the first element model of a certain domain to be close to the representative value of the feature amount vector regarding the adjustment data obtained in a domain of the second element model.

The aspect may further include a specification unit configured to receive a specification as to whether the specific feature to be analyzed by an element model of the plurality of element models selected is a non-defective item feature or a defective item feature. When the integrated model generation unit integrates element models of the plurality of element models that analyze the specific feature specified as the non-defective item feature, the integration may be performed so as to prompt the integrated model to output a determination result determining that the target is a non-defective item, and when the integrated model generation unit integrates element models of the plurality of element models that analyze the specific feature specified as the defective item feature, the integration may be performed so as to prompt the integrated model to output a determination result determining that the target is a defective item.

According to the aspect, determination accuracy when the integrated model determines that the target is a non-defective item or a defective item can be enhanced.

The aspect may further include a candidate model presentation unit configured to present, as a candidate of one of the plurality of element models to be selected, a first element model or the second element model obtained by adjusting the first element model, the first element model being any of the plurality of first element models accessible by the first element model access unit, and performing output related to the specific feature being included when the image data being a sample of the target image data is analyzed.

According to the aspect, for example, when a user selects a sample of the target image data, the first element model or the second element model appropriate for the target image data can be presented to the user as a candidate of the element model to be selected.

The aspect may further include an improvement measure presentation unit configured to present a model improvement measure including any of changing selection of the plurality of element models for creating the integrated model, changing the training data for performing machine learning of the plurality of first element models, changing the adjustment of the second element model, and changing a determination criterion in the integrated model, based on the target image data for which an incorrect determination is made in the inspection execution unit.

According to the aspect, based on the target image data for which an incorrect determination is made, various measures for improving the element models in order to reduce such incorrect determination can be presented to the user.

The aspect may further include an improvement measure presentation unit configured to present an improvement measure of including an image data for which an analysis result related to the specific feature being included is output by an element model of the plurality of element models different from a certain element model of the plurality of element models to be adjusted, as an image data not including the specific feature related to the certain element model to be adjusted, in the adjustment data for adjusting the certain element model to be adjusted.

According to the aspect, for example, when there is an overlap between a feature amount distribution of the element model that outputs the analysis results related to the defective item feature and a feature amount distribution of the element model that outputs the analysis results related to the non-defective item feature, the overlap in the feature amount distributions can be reduced by adjusting any of the element models.

The aspect may further include an image data presentation unit configured to present, based on the target image data for which an incorrect determination is made in the inspection execution unit, comparison image data including a feature similar to a certain feature included in the target image data, from among pieces of training image data used for machine learning of a first element model of the plurality of first element models or pieces of the image data generated so as to include a specific feature related to the first element model.

According to the aspect, the target image data for which an incorrect determination is made and the comparison image data including the feature similar to the feature included in the target image data can be contrasted with each other, thus allowing the user to realize what sort of differences are present between domains.

The aspect may further include an image data presentation unit configured to receive a specification of the target image data and present comparison image data including a feature similar to a certain feature included in the target image data specified, from among pieces of training image data used for machine learning of a first element model of the plurality of first element models or pieces of the image data generated to include a specific feature related to the first element model.

According to the aspect, the specified target image data and the training data including the feature similar to the feature included in the target image data can be contrasted with each other, thus allowing the user to confirm whether application of the domain is successfully performed as intended.

The aspect may further include a generated model storage unit configured to store in a storage medium at least one of the second element model or the integrated model generated, the storage medium being capable of retaining memory until the at least one of the second element model or the integrated model being generated is reused.

According to the aspect, the second element model and the integrated model can be reused.

The aspect may further include an access permission unit configured to receive input of identification data or attribute data of a user who wants access and determine a range of design data within which the access is permitted according to the identification data or the attribute data, a set of pieces of the design data including at least one of data for specifying the plurality of element models integrated into the integrated model, data for specifying the training data used for training a first element model of the plurality of first element models being accessible, data for adjusting the first element model for the second element model, or data for integrating the plurality of element models into the integrated model.

According to the aspect, an accessible range of the design data can be controlled for each user and for each type of data.

An image inspection model generation device according to another aspect of the present invention includes: a first element model access unit configured to access a plurality of first element models, subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models being different from each other in the specific feature; a second element model generation unit configured to generate a second element model by adjusting at least one of the plurality of first element models to adapt to adjustment data different from training data used for training the at least one of the plurality of first element models; a selection unit configured to receive a specification of a plurality of element models, the plurality of element models being selected from a set of element models including the plurality of first element models and the second element model, and the plurality of element models including at least one of the second element models and at least one of the plurality of element models other than the at least one of the plurality of first element models which is a basis for generating the at least one second element model; and an integrated model generation unit configured to generate an integrated model by integrating the plurality of element models selected, the integrated model outputting a determination result as to whether the target of the image data input to the integrated model is a defective item.

According to the aspect, at least one of the plurality of first element models different from each other in the specific feature is adjusted to adapt to the adjustment data different from the training data of the first element models to generate the second element models, the plurality of element models including at least one second element model are selected from the set of element models including the first element models and the second element models, and the plurality of selected element models are integrated, thus allowing the integrated model to be generated. In addition, the determination result as to whether the target is a non-defective item can be obtained by inputting the target image data to the generated integrated model. In other words, domain adaptation can be performed for each element model, and in addition, the plurality of element models responding to features different from each other are integrated to enable generation of the integrated model that can perform comprehensive determination.

An image inspection model generation program according to another aspect of the present invention causes a computer to perform: accessing a plurality of first element models, subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models being different from each other in the specific feature; generating a second element model by adjusting at least one of the plurality of first element models to adapt to adjustment data different from training data used for training the at least one of the plurality of first element models; receiving a specification of a plurality of element models, the plurality of element models being selected from a set of element models including the plurality of first element models and the second element model, and the plurality of element models including at least one of the second element models and at least one of the plurality of element models other than the at least one of the plurality of first element models which is a basis for generating the at least one second element model; and generating an integrated model by integrating the plurality of element models selected, the integrated model outputting a determination result as to whether the target of the image data input to the integrated model is a defective item.

According to the aspect, at least one of the plurality of first element models different from each other in the specific feature is adjusted to adapt to the adjustment data different from the training data of the first element models to generate the second element models, the plurality of element models including at least one second element model are selected from the set of element models including the first element models and the second element models, and the plurality of selected element models are integrated, thus allowing the integrated model to be generated. In addition, the determination result as to whether the target is a non-defective item can be obtained by inputting the target image data to the generated integrated model. In other words, domain adaptation can be performed for each element model, and in addition, the plurality of element models responding to features different from each other are integrated to enable generation of the integrated model that can perform comprehensive determination.

An image inspection device according to another aspect of the present invention includes: an integrated model generated by the integrated model generation method; an image acquisition unit configured to acquire target image data obtained by capturing an image of a target to be inspected; and an inspection execution unit configured to obtain a determination result as to whether the target is a non-defective item by inputting the target image data acquired to the integrated model and executing the integrated model.

According to the aspect, the determination result as to whether the target is a non-defective item can be obtained by inputting the target image data to the integrated model generated by the integrated model generation method.

### ADVANTAGEOUS EFFECTS OF INVENTION

According to the present invention, an image inspection device, an image inspection method, and an image inspection model generation device to enable generation of an inspection model adapted to an environment of a site with a lighter learning workload can be provided.

### BRIEF DESCRIPTION OF DRAWINGS

FIG. 1 is a schematic configuration diagram of an image inspection system according to an embodiment of the present invention.
FIG. 2 is a functional block diagram illustrating a configuration of an image inspection device according to the embodiment.
FIG. 3 is a functional block diagram illustrating a configuration of a first element model.
FIG. 4 is a functional block diagram illustrating a configuration of a second element model generation unit.
FIG. 5 is a diagram illustrating an example of correction performed by a feature amount correction unit of FIG. 4.
FIG. 6 is a diagram for illustrating an example of integrating a plurality of element models.
FIG. 7 is a flowchart for illustrating an example of integrated model generation processing and inspection processing executed in the image inspection device according to the embodiment.
FIG. 8 is a block diagram illustrating a physical configuration of the image inspection device according to the embodiment.
FIG. 9 is a diagram illustrating an example of a screen configuration when an inspection model as an element model is created.
FIG. 10 is a diagram illustrating an example of a screen configuration for verifying the inspection model after the inspection model is created.
FIG. 11 is a diagram illustrating an example of a screen configuration when an inspection model is created.
FIG. 12 is a diagram illustrating an example of a screen configuration presenting images similar to verification sample images for which incorrect recognition is made.

### DESCRIPTION OF EMBODIMENTS

An embodiment of the present invention will be described below. In the following description of the drawings, the same or similar parts are denoted by the same or similar reference signs. Note that the drawings are schematic drawings. Thus, specific dimensions and the like should be determined in light of the following description. It goes without saying that different drawings also include parts with dimensional relationships and proportions different from one another. In addition, interpretation of the technical scope of the present invention should not be limited to the embodiment.

A preferred embodiment of the present invention will be described with reference to the attached drawings.

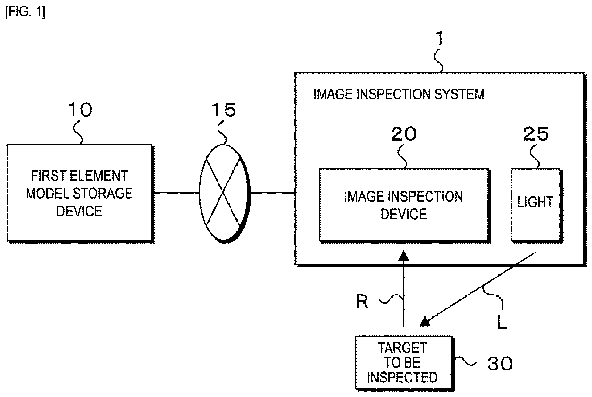

FIG. 1 is a schematic configuration diagram of an image inspection system 1 according to an embodiment of the present invention. The image inspection system 1 includes an image inspection device 20 and a light 25. The light 25 irradiates a target to be inspected 30 with light L. The image inspection device 20 captures an image of reflected light R, and performs inspection of the target to be inspected 30, based on image data (hereinafter also referred to as "target image data") of the target to be inspected 30. The image inspection device 20 is connected to a first element model storage device 10 via a communication network 15. The first element model storage device 10 stores a first element model generated in another domain (for example, at another site or under another environment). Details of the first element model will be described below.

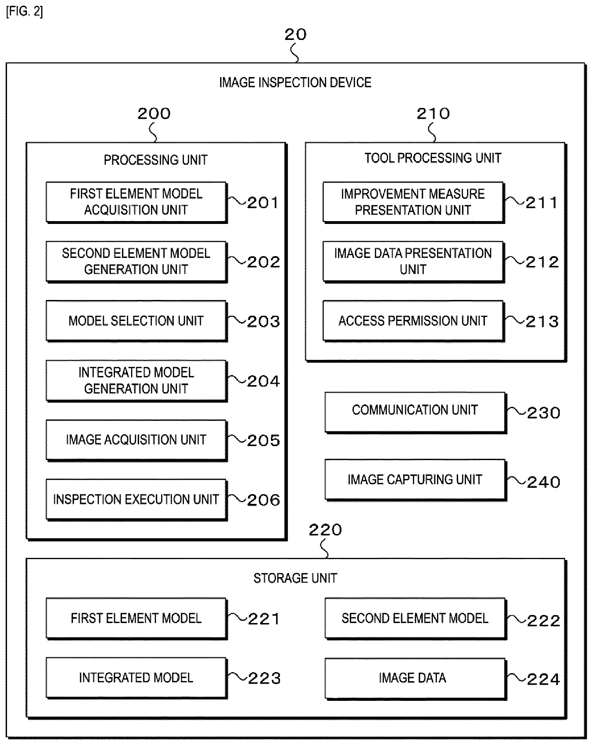

FIG. 2 is a functional block diagram illustrating a configuration of the image inspection device 20 according to the present embodiment. The image inspection device 20 includes, for example, a processing unit 200, a tool processing unit 210, a storage unit 220, a communication unit 230, and an image capturing unit 240.

The communication unit 230 receives a first element model 221 from the first element model storage device 10 or another device via, for example, the communication network 15. It is preferable that the received first element model 221 be stored in the storage unit 220. The image capturing unit 240 is, for example, an image sensor such as a camera, and captures an image of the target to be inspected 30.

The storage unit 220 is configured to store various pieces of information. The storage unit 220 stores, for example, the first element model 221, a second element model 222, an integrated model (image inspection model) 223, and image data 224. Storing the first element model 221 in the storage unit 220 can facilitate subsequent acquisition of first element models.

The second element model 222 is a model generated by adjusting the first element model 221 generated in another domain to adapt to adjustment data obtained in a current domain. The integrated model 223 is a model generated by integrating a plurality of second element models 222. When the integrated model 223 is generated, the first element model 221 may be integrated in addition to the second element models 222. The image data 224 includes, for example, various pieces of image data, such as training data, sample data, and target image data.

The processing unit 200 has a function of generating the second element model 222 by adjusting the first element model 221, generating the integrated model 223 by using the second element model 222, and inspecting the quality of the target to be inspected by using the integrated model 223. The processing unit 200 includes, for example, a first element model acquisition unit 201, a second element model generation unit 202, a model selection unit 203, an integrated model generation unit 204, an image acquisition unit 205, and an inspection execution unit 206.

The first element model acquisition unit 201 makes one or more first element models 221 available (accessible). As methods for making the first element model(s) available, for example, the first element model(s) 221 may be acquired (read) from the first element model storage device 10 or the storage unit 220, the first element model(s) 221 may be created, or provision of a library containing existing first element model(s) 221 may be received. In other words, it is only necessary that the first element model(s) 221 is (are) prepared so as to be available.

The first element model 221 is a model subjected to machine learning with use of training data in a certain domain. The first element model 221 receives input of pieces of input data in a certain domain, and outputs presence or absence of a specific feature in the pieces of input data, or a likelihood of the presence or the absence of the specific feature.

As the input data, for example, image data obtained by capturing an image of the target to be inspected, waveform data obtained by observing vibration of the target to be inspected, waveform data obtained by observing sound waves, and the like may be used. In the present embodiment, a case in which the input data is image data will be illustratively described.

The specific feature is a categorized feature that exhibits an individual difference in external appearance of the target to be inspected. The specific feature may be classified, for example, into any of unevenness of a surface of the target to be inspected, a material adhering to a surface of the target to be inspected, and an anomaly in casting or machining of a shape of the target to be inspected.

The unevenness of the surface of the target to be inspected may be subclassified into a flaw, a dent, a scratch, a concavity, and the like. The material adhering to the surface of the target to be inspected may be subclassified into dust, dirt, and the like. The anomaly in casting or machining of the shape of the target to be inspected may be subclassified into a burr, a chip, and the like.

The first element models 221 are different from each other in the specific feature.

When the specific feature is present in the image data, the first element model 221 may further output a location at which the specific feature is present. When a likelihood of presence or absence of the specific feature is output, a location at which the specific feature is likely to be present may be further output.

The location at which the specific feature is present and the location at which the specific feature is likely to be present may be output, for example, in any of the following forms of (1) to (3): (1) output center coordinates of those locations; (2) output an image in which those locations are depicted by using a region of any shape (for example, a rectangle); (3) output a map image indicating a state of distribution of those locations.

As a method of identifying the location at which the specific feature is present and the location at which the specific feature is likely to be present, a method may be used, for example, that divides the image to be input to the model into a plurality of small regions to train the model. In the method, each divided small region is successively input to the model, and in order to identify the location in the input image with reference to the order of the input, the order and the location are associated with each other, and learning of the feature of the image is performed for each small region.

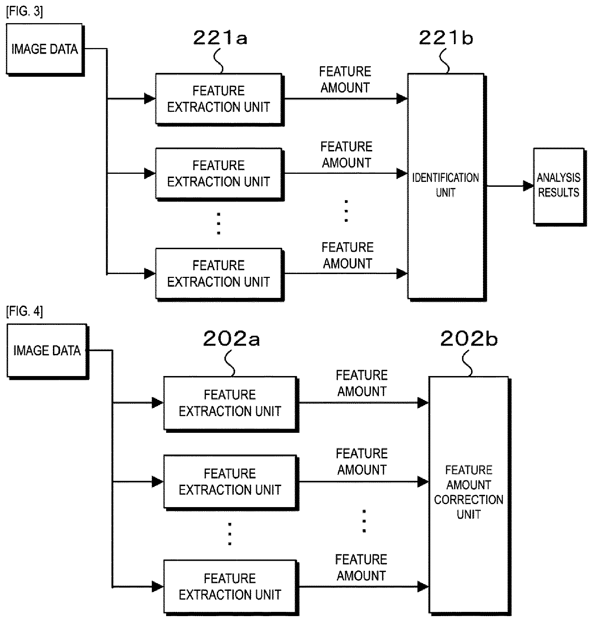

As illustrated in FIG. 3, the first element model 221 includes, for example, a plurality of feature extraction units 221a and an identification unit 221b.

Each feature extraction unit 221a outputs a feature amount of the target image data obtained by capturing an image of the target to be inspected. As the feature amount, for example, an area, a perimeter, a line width, and a color depth of a blob may be used. Here, the blob means a set of regions having common features, such as a color and a luminance value, in the image.

The identification unit 221b calculates analysis results related to the first element model 221, based on a feature amount vector of which element is the feature amount output from each feature extraction unit 221a. As for the identification unit 221b, for example, Bayesian identification, the Mahalanobis distance, and a support vector machine (SVM) may be used.

The analysis results calculated by the identification unit 221b may include, for example, determination results as to whether the specific feature is included or a likelihood indicating an assumption that the specific feature is likely to be included. In other words, the analysis results may include information related to whether the specific feature is included.

The second element model generation unit 202 illustrated in FIG. 2 generates the second element models 222 by adjusting (performing domain transform of) at least one of a plurality of first element models 221 prepared by the first element model acquisition unit 201 to adapt to adjustment data different from the training data used for training of the first element models 221. The training data is data obtained in another domain, and the adjustment data is data obtained in the current domain.

"To adapt to adjustment data" means "such that the second element model 222 to which the adjustment data is input outputs more correct analysis results regarding the adjustment data". "More correct" means, for example, "expected determination results are obtained regarding more pieces of adjustment data out of a plurality of pieces of adjustment data", "a likelihood regarding one piece of adjustment data becomes higher", and "an overall likelihood regarding a plurality of pieces of adjustment data becomes higher".

The second element model 222 can be generated (adjusted) using, for example, any of the following methods of (1) to (3).
(1) The second element model 222 is generated by adjusting, through machine learning by using adjustment data, the first element model 221 which is a basis for generating the second element model 222. The adjustment data in this case is training data different from the training data used at a time when the first element model 221 is generated.
(2) The second element model 222 is generated by correcting the feature amount vector output from the model such that a representative value of the feature amount vector regarding the training data used for training the first element models 221 is close to a representative value of the feature amount vector regarding the adjustment data. As the representative value of the feature amount vector, for example, an average value of the feature amount vectors, and a peak value of a distribution function obtained by applying a distribution of the feature amount vector to the distribution function such as a Gaussian distribution may be used. Prior to calculation of the representative value of the feature amount vector, preprocessing, such as removing an abnormal value of the feature amount vector, may be performed.
(3) When the first element model 221 or a generated second element model 222 is a model that outputs presence or absence of the specific feature, a determination criterion regarding presence or absence of the specific feature is changed. Here, when adjustment data is input, the adjustment data being image data of a target of which presence or absence of the specific feature is known, the determination criterion can be changed such that an output of the element model matches the known presence or absence.

The method of (2) above will be specifically described with reference to FIG. 4. As illustrated in the figure, the second element model generation unit 202 includes, for example, a plurality of feature extraction units 202a and a feature amount correction unit 202b.

Each feature extraction unit 202a is the same as each feature extraction unit 221a of the first element model 221 as the basis. In other words, each feature extraction unit 202a outputs a feature amount of the image data obtained by capturing an image of the target to be inspected.

The feature amount correction unit 202b corrects the feature amount vector of which element is the feature amount output from each feature extraction unit 202a to generate the second element model 222. The feature amount correction unit 202b may be included in the first element model 221 as the basis, or the feature amount correction unit 202b may be added to the first element model 221 as the basis at the stage of generating the second element model 222 by adjusting the first element model 221 as the basis.

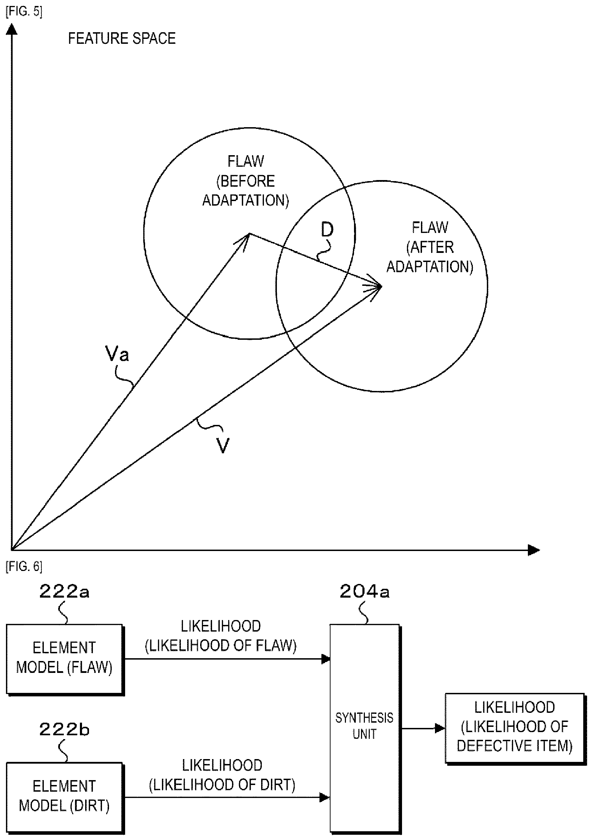

With reference to FIG. 5, an example of correction performed by the feature amount correction unit 202b of FIG. 4 will be described.

First, suppose that an image related to a flaw is input to each feature extraction unit 202a as the adjustment data in the current domain. In this case, the feature amount correction unit 202b calculates a feature amount vector V of which element is the feature amount output from each feature extraction unit 202a. Note that, when a plurality of images related to a flaw are input, an average value of the feature amount vectors corresponding to respective images is calculated as the feature amount vector V regarding the adjustment data.

Next, the feature amount correction unit 202b reads, from the storage unit 220, an average value Va of the feature amount vectors regarding the training data used for training the first element models 221. It is preferable that the average value Va of the feature amount vectors regarding the training data be calculated and stored in the storage unit 220 in advance.

Next, the feature amount correction unit 202b calculates a difference vector D between the feature amount vector V regarding the adjustment data and the average value Va of the feature amount vectors regarding the training data. The difference vector D corresponds to a domain shift amount.

Next, the feature amount correction unit 202b corrects the feature amount vector of which element is the feature amount output from each feature extraction unit 202a such that a feature amount vector obtained by subtracting the difference vector D from an uncorrected feature amount vector is equal to a corrected feature amount vector. In this manner, the first element model 221 is adjusted, and the second element model 222 is generated.

The model selection unit 203 illustrated in FIG. 2 selects a plurality of element models including at least one second element model 222 from a set of element models including the first element models 221 and the second element models 222. For example, when the element models are to be selected, a set of element models including the first element models 221 and the second element models 222 is presented, and a specification of element models from the presented set is received, allowing the specified element models to be selected.

When the element models are to be selected, it is desirable for the selection to include at least one second element model 222 and at least one element model other than the first element model 221 as the basis for generating the second element model 222. To implement this, for example, a specification operation may be restricted from being completed unless at least one second element model 222 and at least one element model other than the first element model 221 as the basis for generating the second element model 222 are included in the plurality of specified element models. Alternatively, a display for guiding an operation of a user may be shown such that at least one second element model 222 and at least one element model other than the first element model 221 as the basis for generating the second element model 222 are ultimately specified.

In the present embodiment, "to present" may mean to display in a display unit of the image inspection system 1 such that the user can visually recognize presented information, or may mean to output data such that the user can recognize presented information by using another device.

Here, the model selection unit 203 may include a candidate model presentation unit. The candidate model presentation unit has a function of presenting the user with candidates of the element models to be selected. The candidates of the element models presented by the candidate model presentation unit may include, for example, the following models of (1) and (2):
(1) Any of the first element models 221 available (accessible) to the first element model acquisition unit 201, which is the first element model 221 that performs output related to the specific feature being included when the image data as a sample of the target image data is analyzed;
(2) The second element model 222 obtained by adjusting the first element model 221 of (1) above.

The integrated model generation unit 204 generates the integrated model 223 by integrating the plurality of element models selected by the model selection unit 203.

For example, the integrated model 223 may be a model that classifies input image data into a plurality of classes and outputs a class to which the input image data belongs, or may be a model that outputs a likelihood that the input image data belongs to a specific class.

Here, the specific class may be a class determined in advance, may be a class, such as a class having relatively the highest likelihood, that is dynamically determined, or may be all of the classes. The integrated model 223 may be a model that outputs, for example, determination results as to whether the target to be inspected is a non-defective item, based on the input image data.

The determination results as to whether the target to be inspected is a non-defective item may be determination results that allow for making a distinction between a non-defective item and an item other than the non-defective item, or may be determination results obtained by further classifying the determination results of an item other than the non-defective item into a plurality of subclasses. A determination criterion for obtaining the determination results may be changeable.

The classes related to the output of the integrated model 223 are classes corresponding to quality levels of the target to be inspected. The classes corresponding to the quality levels include three or more ranks of quality grade classes, in addition to classes of whether the target is defective or not (two ranks of classes). For example, when the target to be inspected is an agricultural product, the quality grade classes are used for classification.

A configuration other than the part specialized for image inspection according to the present embodiment can also be used for a purpose other than image inspection. In that case, the class related to the output of the integrated model 223 is not a class corresponding to presence or absence of a specific feature related to one element model out of the plurality of selected element models, but a class into which the input data is classified based on presence or absence of all specific features related to the plurality of selected element models or a likelihood of the presence or absence. As examples of the purpose other than image inspection, comprehensive classification results regarding states of a target to be detected and an environment can be the output of the integrated model 223, based on the output of the element models related to presence or absence of specific state features, by using, as the input data, the output of sensors that detect a vibration waveform, a sound waveform, illuminance, temperature, humidity, atmospheric pressure, the amount of chemical substances, a person's action, and the like. In this case as well, a learning workload on the models can be reduced through adjustment of the element models and selection of the element models.

With reference to FIG. 6, an example of integrating a plurality of element models will be described. In the figure, a flaw model 222a and a dirt model 222b are selected as the plurality of element models to be integrated. The flaw model 222a and the dirt model 222b are element models that output analysis results related to a defective item feature. The flaw model 222a is an element model that outputs a likelihood of a flaw, based on input target image data. The dirt model 222b is an element model that outputs a likelihood of dirt, based on input target image data. A synthesis unit 204a of the integrated model generation unit 204 synthesizes the likelihood of the flaw and the likelihood of the dirt, and outputs a likelihood of a defective item. The likelihood of the defective item may be a likelihood obtained by adding the likelihood of the flaw and the likelihood of the dirt, or may be the higher (highest) likelihood between the likelihood of the flaw and the likelihood of the dirt. When integration is performed using the likelihood, a weight may be introduced. Specifically, synthesis may be performed after the likelihood of each element model is multiplied by a predetermined weight. Adjustment of the weight allows a range of a specific element model in a feature space to become larger or smaller.

When the first element model outputs determination results of presence or absence of the specific feature, the second element model based on the first element model may be generated or adjusted by changing the determination criterion. Such a change of the determination criterion also allows the range of the element model in the feature space to become larger or smaller. When the element models that output determination results of presence or absence of the specific feature are integrated, the weight of integration may be adjusted. In other words, a degree to which the determination results of presence or absence of the specific feature affect the output of the integrated model 223 may be adjusted.

Here, the integrated model generation unit 204 may include a specification reception unit. The specification reception unit has a function of receiving, from the user, for each element model, a specification regarding whether the specific feature to be analyzed by the selected element model is a non-defective item feature or a defective item feature. Depending on details of the specification received by the specification reception unit, the integrated model generation unit 204 executes the following processing of (1) or (2).

(1) Case in which Specific Feature Is Specified as Non-Defective Item Feature:
When the integrated model generation unit 204 integrates the element models that analyze the specific feature specified as the non-defective item feature, the integration is performed so as to prompt the integrated model 223 to output a determination result determining that the target to be inspected is a non-defective item.

(2) Case in which Specific Feature Is Specified as Defective Item Feature:
When the integrated model generation unit 204 integrates the element models that analyze the specific feature specified as the defective item feature, the integration is performed so as to prompt the integrated model 223 to output a determination result determining that the target to be inspected is a defective item.

The image acquisition unit 205 illustrated in FIG. 2 acquires the target image data capturing an image of the target to be inspected from the image capturing unit 240 or the storage unit 220.

The inspection execution unit 206 obtains, for example, any of determination results as to whether the target to be inspected is a non-defective item, a class to which the target to be inspected belongs, and a likelihood that the target to be inspected belongs to a specific class, by inputting the target image data acquired by the image acquisition unit 205 to the integrated model 223 and executing the integrated model 223.

The tool processing unit 210 illustrated in FIG. 2 provides the user with tool-like functions for assisting the function of the processing unit 200. The tool processing unit 210 includes, for example, an improvement measure presentation unit 211, an image data presentation unit 212, and an access permission unit 213.

The improvement measure presentation unit 211 presents the user with various improvement measures, based on results from execution of the inspection execution unit 206 and the like. The improvement measure presentation unit 211 presents the user with, for example, the following improvement measures of (1) to (5).
(1) An improvement measure of proposing to change the selection of the element models for creating the integrated model 223, based on the target image data for which an incorrect determination is made by the inspection execution unit 206. For example, when it is determined that the target image data for which an incorrect determination is made is classified as a flaw, a proposal is made to add the flaw model to the element models for creating the integrated model 223 with a specification of being related to the defective item feature.
(2) An improvement measure of proposing to change the training data for performing machine learning of the first element model 221, based on the target image data for which an incorrect determination is made by the inspection execution unit 206. Changing the training data includes replacing the training data, adding the training data, and deleting the training data.
(3) An improvement measure of proposing to change the adjustment data for generating or adjusting the second element model 222, based on the target image data for which an incorrect determination is made by the inspection execution unit 206. Changing the adjustment data includes replacing the adjustment data, adding the adjustment data, and deleting the adjustment data.
(4) An improvement measure of proposing to change the determination criterion of the second element model 222 that outputs presence or absence of the specific feature, based on the target image data for which an incorrect determination is made by the inspection execution unit 206.
(5) An improvement measure of proposing to change the determination criterion in the integrated model 223, based on the target image data for which an incorrect determination is made by the inspection execution unit 206.
(6) An improvement measure of proposing, when related specific features have an overlap in distributions of feature amounts between the element model specified as the non-defective item feature and the element model specified as the defective item feature, to make an adjustment such that the overlapping is reduced.

Regarding (6) above, the improvement measure presentation unit 211 presents an improvement measure of including the image data, with which analysis results related to a specific feature being included are output by an element model different from an element model to be adjusted, in the adjustment data for generating or adjusting the element model to be adjusted as the image data not including a specific feature related to the element model to be adjusted. Detailed description will be given below.

For example, in adjustment of the flaw model when specific features related to models have an overlap between a feature amount distribution of the flaw model specified as the defective item feature and a feature amount distribution of a dust model specified as the non-defective item feature, the following improvement measure can be presented. An improvement measure is presented that includes the image data, with which analysis results related to a feature of dust being included (determination results indicating presence of dust, or determination results having a relatively high likelihood of presence of dust) are output by the dust model, in the adjustment data for adjusting the flaw model as the image data (having a label of) not including a feature of a flaw. Here, a distribution of the feature vector in the feature space is referred to as a feature amount distribution.

Executing the improvement measure allows the flaw model to be improved, and allows the overlap in the feature amount distributions between the flaw model and the dust model to be reduced.

The image data presentation unit 212 presents the user with the image data for the sake of assistance of model improvement. The image data presentation unit 212 presents the user with, for example, the following pieces of comparison image data of (1) and (2).
(1) Based on the target image data for which an incorrect determination is made by the inspection execution unit 206, comparison image data including a feature similar to a feature included in the target image data is presented from training image data used for machine learning of the first element model 221 or image data generated to include a specific feature related to the first element model 221. In this manner, the target image data for which an incorrect determination is made and the comparison image data including the feature similar to the feature included in the target image data can be contrasted with each other, thus allowing the user to sense what sort of differences are present between domains. Note that comparison data including the feature similar to the feature included in the specified target image data may be presented from image data generated to include a specific feature related to the second element model 222.
(2) A specification of the target image data is received, and comparison image data including a feature similar to a feature included in the specified target image data is presented from training image data used for machine learning of the first element model 221 or image data generated to include a specific feature related to the first element model 221. In this manner, the specified target image data and the comparison image data including the feature similar to the feature included in the target image data can be contrasted with each other, thus allowing the user to confirm whether application of the domain of the model is executed as intended. Note that comparison data including the feature similar to the feature included in the specified target image data may be presented from image data generated to include a specific feature related to the second element model 222.

When the comparison image data is presented in (1) and (2) above, the comparison image data most similar to the target image data may be presented in an emphasized manner such that the comparison image data can be distinguished from other comparison image data.

The access permission unit 213 performs control as to whether access to design data registered with the image inspection system 1 can be permitted. The access permission unit 213 manages a range of design data to which access is permitted for each piece of identification data or attribute data, with which the user can be identified. When the user requests access to design data, the access permission unit 213 refers to an accessible range of the design data with use of the identification data or the attribute data of the user, and performs control as to whether the access can be permitted. The accessible range of the design data can be determined in, for example, the following units of data of (1) to (5).
(1) Data for specifying the element models integrated into the integrated model 223.
(2) Data for specifying the training data used for training the first element models 221 available.
(3) Data for adjusting the first element model 221 into the second element model 222.
(4) Data for integrating a plurality of element models into the integrated model 223.
(5) Data indicating data for verifying performance of the integrated model 223 and the verification result.

By implementing management as described above, the range of the design data to which access is permitted can be controlled for each user and for each type of data.

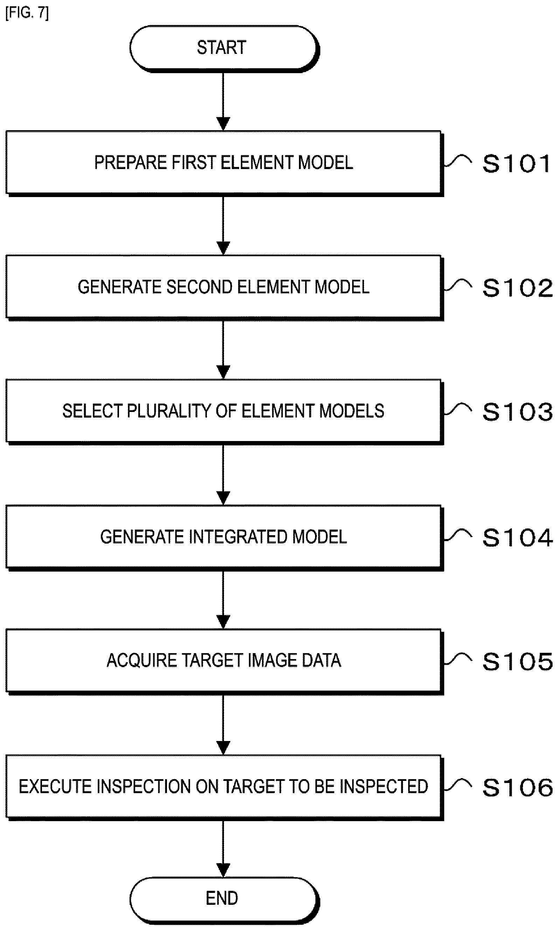

Next, with reference to FIG. 7, an example of integrated model generation processing and inspection processing executed in the image inspection device 20 according to the embodiment will be described.

First, the first element model acquisition unit 201 of the image inspection device 20 prepares one or more first element models 221 to be available (Step S101).

Next, the second element model generation unit 202 adjusts at least one of the first element models 221 prepared in Step S101 above to adapt to adjustment data different from training data used for training the first element models 221, and thereby generates the second element models 222 (Step S102).

Next, the model selection unit 203 selects a plurality of element models including at least one second element model 222 from a set of element models including the second element models 222 generated in Step S102 above and the first element models 221 prepared in Step S101 above (Step S103).

Next, the integrated model generation unit 204 integrates the plurality of element models selected in Step S103 above, and thereby generates the integrated model 223 (Step S104).

Next, the image acquisition unit 205 acquires target image data capturing an image of a target to be inspected (Step S105).

Next, the inspection execution unit 206 inputs the target image data acquired in Step S105 above to the integrated model 223 generated in Step S104 above, then executes the integrated model 223, and thereby executes inspection of the target to be inspected (Step S106). Then, the present processing ends.

Note that, in the flowchart described in the present embodiment, the order may be altered on the condition that the processing remains consistent. For example, first, a plurality of first element models may be selected from the prepared first element models, and then the second element models may be generated regarding a part or all of the selected first element models. Note that the generated second element models may be further adjusted to generate new second element models.

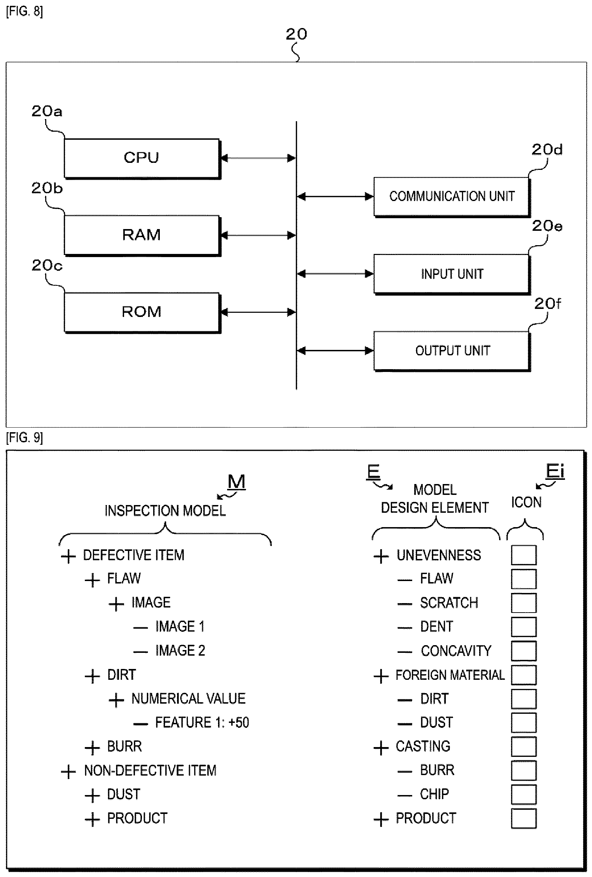

FIG. 8 is a diagram illustrating a physical configuration of the image inspection device 20 according to the present embodiment. The image inspection device 20 includes a central processing unit (CPU) 20a corresponding to a computation unit, a random access memory (RAM) 20b corresponding to a storage unit, a read only memory (ROM) 20c corresponding to a storage unit, a communication unit 20d, an input unit 20e, and an output unit 20f. Each of these configurations is connected so as to allow transmission and reception of data to and from each other via a bus.

Note that, although the description of the present example assumes that the image inspection device 20 is configured with a single computer, the image inspection device 20 may be implemented with a combination of a plurality of computers. The configuration illustrated in FIG. 8 is an example, and the image inspection device 20 may include configuration(s) other than these configurations, or need not include a part of these configurations.

The CPU 20a is a computation unit that performs control related to execution of programs stored in the RAM 20b or the ROM 20c, and computation and processing of data. The CPU 20a included in the image inspection device 20 is, for example, a computation unit that executes a program for generating the integrated model (image inspection model). The CPU 20a receives various pieces of data from the input unit 20e and the communication unit 20d, causes computation results of data to be output from the output unit 20f and displayed on an external display device, and stores the computation results in the RAM 20b.

The RAM 20b is a type of storage unit being capable of overwriting of data, and may be configured with a semiconductor storage element, for example. The RAM 20b may store data, such as the programs to be executed by the CPU 20a, the image data, and the models. Note that these are illustrative, and the RAM 20b may store data other than these, or need not store a part of these.

The ROM 20c is a type of storage unit being capable of reading of data, and may be configured with a semiconductor storage element, for example. The ROM 20c may store the program for generating the integrated model and data not to be overwritten, for example.

The communication unit 20d is an interface for connecting the image inspection device 20 to other equipment. The communication unit 20d may be connected to a communication network, such as the Internet.

The input unit 20e receives input of data from the user, and may include, for example, a keyboard and a touch panel.

The output unit 20f outputs computation results obtained by the CPU 20a, and displays the computation results on an external display device.

Each program may be stored and provided in a computer readable storage medium, such as the RAM 20b and the ROM 20c, or may be provided via the communication network connected by the communication unit 20d. In the image inspection device 20, the CPU10a executes the programs to implement various functions described with reference to FIG. 2 and the like. Note that these physical configurations are illustrative, and need not necessarily be independent configurations. For example, the image inspection device 20 may include large-scale integration (LSI), in which the CPU 20a, the RAM 20b, and the ROM 20c are integrated.

With reference to FIG. 9 to FIG. 11, an example of a screen displayed on an external display device based on information output from the output unit 20f of the image inspection device 20 will be described.

FIG. 9 is a screen example when an inspection model is created. Each of the "flaw", the "dirt", and the like corresponds to the element model, and the overall inspection model obtained by integrating those corresponds to the integrated model. On the screen illustrated in FIG. 9, from the left side, an inspection model section M, a model design element section E, and an icon section Ei are provided. In the screen as illustrated in FIG. 9, specifying whether a specific feature analyzed by each element model (for example, a feature of a flaw analyzed by the "flaw" model) corresponds to a non-defective item feature or a defective item feature is an input to the specification reception unit of the integrated model generation unit 204.

In the inspection model section M, a hierarchical structure of the inspection model is displayed. In FIG. 9, a defective item class and a non-defective item class are displayed as classes for classifying the inspection model; a flaw model, a dirt model, and a burr model are displayed as element models corresponding to the defective item class; and a dust model and a product model are displayed as element models corresponding to the non-defective item class.

The text "image" in the inspection model section M is a link to an image registered in relation to generation or adjustment of each element model, and when being clicked, the image is displayed.

A "+" button and a "-" button displayed on the left side of each model are a collapse button and an expand button, respectively. For example, when the "+" button is pressed, lower levels of the hierarchy are collapsed, and the "+" button is then changed to the "-" button.

In the model design element section E, design elements in designing the inspection model are displayed, and in the icon section Ei, icons depicting details of their corresponding design elements are displayed. The design elements are element models of "flaw" and "scratch", for example. A group, such as "unevenness", that bundles one or more element models is also displayed. The group may be considered to be one element model. When any of the design elements is selected and moved to a model structure of the inspection model section M (for example, with a drag-and-drop operation), the design element is incorporated into the model structure to which the design element is moved. The design element that has been moved to the inspection model section M may be removed from the model design element section E, or a text color may be changed to a light color so as to inform that the design element has been moved.

The inspection model of the inspection model section M can be newly created. Alternatively, the inspection model can also be created by reading an existing inspection model and changing the inspection model. The element model adjusted in the inspection model section M may be allowed to be added to the model design element section E with a drag-and-drop operation or the like. In that case, an appropriate element model name may be assigned. This operation corresponds to customization of model design elements (element models) by user, and reusing components by the same user can increase the efficiency of design, and exchanging an inspection model between different users or companies can increase the number of users of the inspection model and accelerate the improvement of the inspection model.

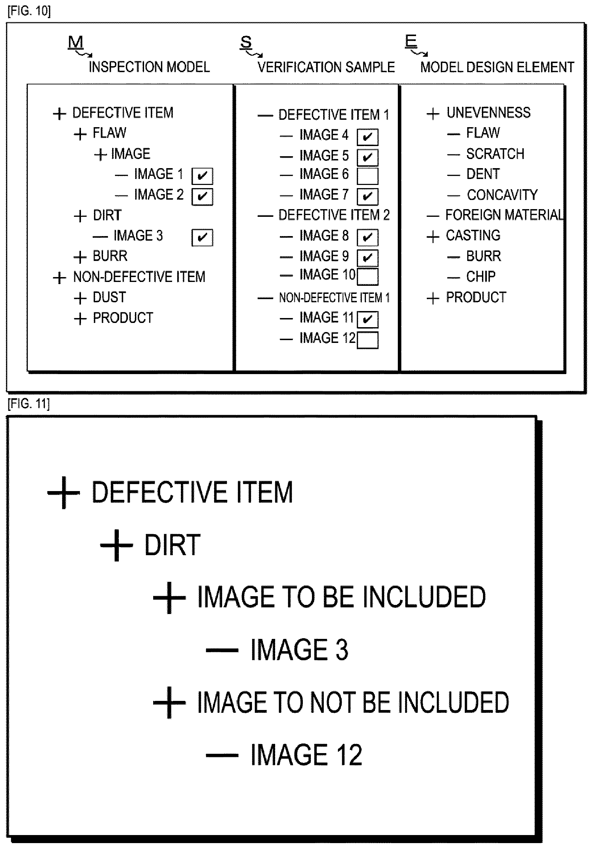

FIG. 10 is a screen example for verifying the inspection model after the inspection model is created. On the screen illustrated in FIG. 10, from the left side, an inspection model section M, a verification sample section S, and a model design element section E are provided. Display elements of the inspection model section M and the model design element section E are similar to those of FIG. 9.

The verification sample section S is a section for displaying images to be verified and their verification results, and images that have been successfully and correctly determined are checked, whereas images that have failed to be correctly determined are not checked. In FIG. 10, image 6, image 10, and image 12 are displayed as images that have failed to be correctly determined.

Here, for example, when it is determined that image 6 and image 10 belong to one of a flaw, dirt, and a burr of a defective item, the improvement measure presentation unit 211 may propose, as candidates of the improvement measures, adding image 6 and image 10 to the inspection model corresponding to the feature to which image 6 and image 10 have been determined to belong and changing a determination threshold (extending the range in the feature space). In contrast, when it is determined that image 6 and image 10 belong to a scratch other than the flaw, the dirt, and the burr of the defective item, adding the scratch to the defective item may be proposed as a candidate of the improvement measure.

Similarly, when it is determined that image 12 belongs to one of a flaw, dirt, and a burr of a defective item, the improvement measure presentation unit 211 may propose, as a candidate of the improvement measure, deleting registered images such as image 1, image 2, and image 3, or changing a determination threshold (narrowing the range in the feature space). In contrast, when it is determined that image 12 belongs to dust of a non-defective item, adding image 12 to the dust model and changing the determination threshold (extending the range in the feature space) may be proposed as candidates of the improvement measures.

Note that the above description is given on the assumption that when an image is registered in association with an element model, the image includes a specific feature related to the element model, but a specification that the image does not include a specific feature related to the element model may be allowed. An example of a screen allowing such a specification is illustrated in FIG. 11. For example, suppose that there are a dust model related to a dust feature specified as the non-defective item feature and a dirt model related to a dirt feature specified as the defective item feature, and when an image including the dust feature is incorrectly recognized as an image including the dirt feature, the dirt model can be improved by registering the image including the dust feature as a "non-including image" in relation to the dirt model (an image not including the dirt feature) to train the dirt model. Such a proposal may be added to the candidates of the improvement measures.

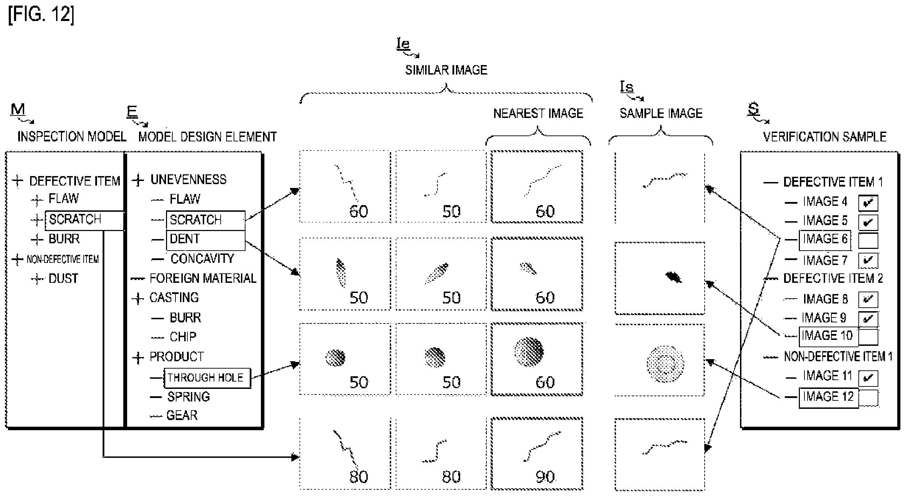

FIG. 12 is a screen example for presenting images similar to verification sample images for which incorrect recognition is made. Display elements of the inspection model section M, the model design element section E, and the verification sample section S illustrated in FIG. 12 are similar to those of FIG. 9 and FIG. 10.

Similarly to FIG. 10, in the verification sample section S, image 6, image 10, and image 12 are displayed as images that have failed to be correctly determined. On the left side of the verification sample section S, sample images Is corresponding to image 6, image 10, and image 12 are displayed.

On the left side of the sample images Is, among images of each component of the model design element section E, similar images Ie that are similar to the sample images Is are displayed. The images of each component may be training images, or may be images created using models. A numerical value displayed in each frame of each similar image le is a degree of similarity to the sample image Is. An image among the similar images Ie of each component that is most similar to the sample image Is is displayed on the side of the sample image Is as a nearest image.

It can be recognized that image 6 of FIG. 12 is similar to an image of a scratch, image 10 is similar to an image of a dent, and image 12 is similar to an image of a through hole.

It can be recognized that image 6 has a difference in a line width (thickness) of a scratch in comparison to the similar image Ie, image 10 has a difference in depth of a color of a dent in comparison to the similar image Ie, and image 12 has a difference in whether a circle is single or double in comparison to the similar image Ie.

In this manner, by contrasting the similar images Ie and the sample images Is with each other, the user can sense what sort of differences there are between domains.

Here, the similar images Ie displayed on the left side of the sample images Is are not limited to the images of each component of the model design element section E, and may be images of each model of the inspection model section M. For example, as illustrated in the lowermost part of FIG. 12, among images of a scratch model of the inspection model section M, similar images Ie similar to image 6 may be displayed.

Although FIG. 12 illustrates an example of a case in which images similar to verification sample images for which incorrect recognition is made are presented, images similar to verification sample images freely specified by the user may be presented. For example, image 6 of a verification sample image for which incorrect recognition is made is an image of a relatively thick scratch. Thus, when such image 6 is added to the scratch model of the inspection model section M, this allows for confirmation that the scratch model has been modified to adapt to a thick scratch.

As described above, according to the image inspection device 20 of the present embodiment, at least one of the plurality of first element models 221 different from each other in the specific feature is adjusted to adapt to the adjustment data different from the training data of the first element models 221, and the second element models 222 can be thereby generated. The plurality of element models including at least one second element model 222 can be selected from the set of element models including the first element models 221 and the second element models 222. The plurality of selected element models are integrated, and the integrated model 223 can be thereby generated. In addition, the generated integrated model 223 can output the class into which input data is classified or the likelihood that the input data is classified into any of the classes, based on presence or absence of all of the specific features related to the plurality of selected element models or the likelihood of the presence or the absence of all of the specific features.

In other words, domain adaptation can be performed for each element model, and in addition, the plurality of element models responding to features different from each other are integrated, which enables generation of the integrated model 223 that can perform comprehensive determination, rather than presence or absence of the feature to which each element model responds.

Therefore, according to the image inspection device 20 of the present embodiment, the integrated model adapted to an environment of a site can be generated with a lower learning workload. Here, domain adaptation refers to making an adjustment to a model that is trained in a certain region such that the model effectively functions in another region. Examples of the region include a target to be inspected or analyzed and an operating environment. Examples of methods of domain adaptation include transfer learning and fine-tuning.

Note that the above-described embodiment is provided for facilitating understanding of the present invention, and is not to provide limited interpretation of the present invention. The present invention may be modified/improved without departing from the gist thereof, and the present invention also includes equivalents thereof. In other words, such variations that are obtained by those skilled in the art appropriately making a design change to the embodiment are also included in the scope of the present invention as long as the variations include features of the present invention. For example, each element included in the embodiment as well as its arrangement, material, condition, shape, size, and the like is not limited to the illustrated examples and may be changed appropriately. The embodiment is illustrative, and it goes without saying that partial replacements and combinations of configurations illustrated in different embodiments are allowed, and these are also included in the scope of the present invention as long as these include features of the present invention.

### Modification

Each model described in the above-described embodiment may be implemented in a neural network. In the present modification, the domain transform performed by the second element model generation unit 202 described above may be implemented using a method of transfer learning or fine-tuning, for example.

In the domain transform in the present modification, a model of a neural network trained using image data of a transfer source domain is constructed in advance, and image data of a transfer target domain is input to the model to train the model, and the model adapted to the transfer target domain is thereby constructed.

Transfer learning is a method in which, when a model of the transfer target domain is trained, learning of a weight of a new network layer for analyzing the image data of the transfer target domain is performed, with a weight of a network of the transfer source domain being fixed. In contrast, fine-tuning is a method in which, when a model of the transfer target domain is trained, re-learning of the weight of the entire model is performed using the image data of the transfer target domain, with the weight of the network of the transfer source domain being an initial value.

The model of the neural network may be a binary classification model, and outputs, for example, presence or absence of a specific feature in an input image, a likelihood of the presence or the absence of the specific feature, or the like. Training of the model may be either supervised learning using data with labels meaning classes, or semi-supervised learning using only data belonging to one class.

In supervised learning, an image given a ground truth label corresponding to a class is input, and the weight of the network layer is learned such that output correctly determines the class. The classes in supervised learning are, in a case of the flaw model, for example, two classes, that is, a class of "a flaw" and a class of "not a flaw".

In semi-supervised learning, for example, only an image belonging to one class is input, an input data space is projected into any other space, and the weight of the network layer is learned such that the radius of a hypersphere is the smallest in the projected space. The one class in semi-supervised learning is, in a case of the flaw model, for example, a class of "a flaw".

In the present modification, model integration performed by the integrated model generation unit 204 of the above-described embodiment may be implemented using, for example, any of the following methods of (1) and (2).
(1) Similarly to the above-described embodiment, likelihoods output from respective models are synthesized, and a likelihood output from the integrated model is thereby obtained.
(2) The weights of the networks of respective models are averaged and synthesized, and are thereby integrated into one model. Detailed description will be given below.

When network structures of respective models completely match, the weights of the whole networks are averaged and synthesized, and are thereby integrated into one model.

In contrast, when the network structures of respective models partially match, only in matching parts, the weights are averaged and synthesized, whereas in unmatching parts, the weight of a representative model of the respective models is directly used as an identification unit that performs quality determination, and in addition, a determination criterion of the identification unit may be adjusted using image data of a transfer target domain so as to enable correct identification.

The representative model may be selected by the user, or any of the following models (a) and (b) may be selected from unintegrated models. (a) A model having the best results after performance evaluation, among all of patterns of models created. (b) A model having the largest number of unmatching layers.

### Supplementary Note 1

An integrated model (223) generation method including:
preparing a plurality of first element models (221), subjected to machine learning, for receiving input of input data and outputting presence or absence of a specific feature in the input data or a likelihood of the presence or the absence, different ones of the plurality of first element models (221) being different from each other in the specific feature;
generating a second element model (222) by adjusting at least one of the plurality of first element models (221) to adapt to adjustment data different from training data used for training the at least one of the plurality of first element models (221);
selecting, from a set of element models including the plurality of first element models (221) and the second element model (222), a plurality of the element models including at least one of the second element models (222) and at least one of the element models other than the at least one of the plurality of first element models which is a basis for generating the at least one second element model; and
generating an integrated model (223) by integrating the plurality of the element models selected, wherein
the integrated model (223) is a model for classifying data input to the integrated model (223) into a plurality of classes, the integrated model (223) being a model for outputting a class of the plurality of classes to which the input data belongs, or a model for outputting a likelihood that the input data belongs to a specific class of the plurality of classes, and
each of the plurality of classes is not a class corresponding to presence or absence of a specific feature related to one of
the plurality of the element models selected, but a class into which the input data is classified based on presence or absence of all of a plurality of the specific features related to the plurality of the element models selected or the likelihood of the presence or the absence.

### Supplementary Note 2

An image inspection system (1) including:
a first element model access unit (201) configured to access a plurality of first element models (221), subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models (221) being different from each other in the specific feature;
a second element model generation unit (202) configured to generate a second element model (222) by adjusting at least one of the plurality of first element models (221) to adapt to adjustment data different from training data used for training the at least one of the plurality of first element models (221); a selection unit (203) configured to receive a specification of a plurality of element models, the plurality of element models being selected from a set of the element models including the plurality of first element models (221) and the second element model (222), and the plurality of element models including at least one of the second element models (222) and at least one of the plurality of element models other than the at least one of the plurality of first element models which is a basis for generating the at least one second element model;
an integrated model generation unit (204) configured to generate an integrated model by integrating the plurality of element models selected, the integrated model outputting a determination result as to whether the target of the image data input to the integrated model is a non-defective item;
an image acquisition unit (205) configured to acquire target image data obtained by capturing an image of the target to be inspected; and
an inspection execution unit (206) configured to obtain a determination result as to whether the target is a non-defective item by inputting the target image data acquired to the integrated model (223) and executing the integrated model (223).

### Supplementary Note 3

An image inspection model generation device (20) including:
a first element model access unit (201) configured to access a plurality of first element models (221), subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models (221) being different from each other in the specific feature;
a second element model generation unit (202) configured to generate a second element model (222) by adjusting at least one of the plurality of first element models (221) to adapt to adjustment data different from training data used for training the at least one of the plurality of first element models (221); a selection unit (203) configured to receive a specification of a plurality of element models, the plurality of element models being selected from a set of element models including the plurality of first element models (221) and the second element model (222), and the plurality of element models including at least one of the second element models (222) and at least one of the plurality of element models other than the at least one of the plurality of first element models which is a basis for generating the at least one second element model; and
an integrated model generation unit (204) configured to generate an integrated model by integrating the plurality of element models selected, the integrated model outputting a determination result as to whether the target of the image data input to the integrated model is a defective item.

### Supplementary Note 4

An image inspection model generation program causing a computer to perform:
accessing (201) of a plurality of first element models (221), subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models (221) being different from each other in the specific feature;
generating (202) of a second element model (222) by adjusting at least one of the plurality of first element models (221) to adapt to adjustment data different from training data used for training the at least one of the plurality of first element models (221);
receiving (203) of a specification of a plurality of element models, the plurality of element models being selected from a set of element models including the plurality of first element models (221) and the second element model (222), and the plurality of element models including at least one of the second element models (222) and at least one of the plurality of element models other than the at least one of the plurality of first element models which is a basis for generating the at least one second element model; and
generating (204) of an integrated model (223) by integrating the plurality of element models selected, the integrated model (223) outputting a determination result as to whether the target of the image data input to the integrated model (223) is a defective item.

### Supplementary Note 5

An image inspection device (20) including:
an integrated model (223) generated by the integrated model generation method according to supplementary note 1;
an image acquisition unit (205) configured to acquire target image data obtained by capturing an image of a target to be inspected; and
an inspection execution unit (206) configured to obtain a determination result as to whether the target is a non-defective item by inputting the target image data acquired to the integrated model (223) and executing the integrated model (223).

### REFERENCE SIGNS LIST

- 1: Image inspection system
- 10: First element model storage device
- 15: Communication network
- 20: Image inspection device
- 20a: CPU
- 20b: RAM
- 20c: ROM
- 20d: Communication unit
- 20e: Input unit
- 20f: Output unit
- 25: Light
- 30: Target to be inspected
- 200: Processing unit
- 201: First element model acquisition unit
- 202: Second element model generation unit
- 202a: Feature extraction unit
- 202b: Feature amount correction unit
- 203: Model selection unit
- 204: Integrated model generation unit
- 204a: Synthesis unit
- 205: Image acquisition unit
- 206: Inspection execution unit
- 210: Tool processing unit
- 211: Improvement measure presentation unit
- 212: Image data presentation unit
- 213: Access permission unit
- 220: Storage unit
- 221: First element model
- 221a: Feature extraction unit
- 221b: Identification unit
- 222: Second element model
- 223: Integrated model
- 224: Image data
- 230: Communication unit
- 240: Image capturing unit

## Claims

1. An integrated model generation method comprising:
preparing a plurality of first element models, subjected to machine learning, for receiving input of input data and outputting presence or absence of a specific feature in the input data or a likelihood of the presence or the absence, different ones of the plurality of first element models being different from each other in the specific feature;
generating a second element model by adjusting at least one of the plurality of first element models to adapt to adjustment data different from training data used for training the at least one of the plurality of first element models;
selecting, from a set of element models including the plurality of first element models and the second element model, a plurality of the element models including at least one of the second element models and at least one of the element models other than the at least one of the plurality of first element models which is a basis for generating the at least one second element model; and
generating an integrated model by integrating the plurality of the element models selected, wherein
the integrated model is a model for classifying data input to the integrated model into a plurality of classes, the integrated model being a model for outputting a class of the plurality of classes to which the input data belongs, or a model for outputting a likelihood that the input data belongs to a specific class of the plurality of classes, and
each of the plurality of classes is not a class corresponding to presence or absence of a specific feature related to one of the plurality of the element models selected, but a class into which the input data is classified based on presence or absence of all of a plurality of the specific features related to the plurality of the element models selected or the likelihood of the presence or the absence.

2. The integrated model generation method according to claim 1, wherein
generating the second element model corresponds to adjusting, through machine learning by using the adjustment data, the at least one of the plurality of first element models which is a basis for generating the at least one second element model.

3. The integrated model generation method according to claim 1, wherein
a first element model of the plurality of first element models to be adjusted to generate the second element model includes
a plurality of feature extraction units,
a feature amount correction unit configured to correct a feature amount vector of which element is a feature amount output by each of the plurality of feature extraction units, and
an identification unit configured to calculate an analysis result related to whether the specific feature related to the first element model is included, based on the feature amount vector corrected by the feature amount correction unit, and
generating the second element model corresponds to setting an amount of correction performed by the feature amount correction unit such that a representative value of the feature amount vector regarding training data used for training the first element model, after the feature amount vector is corrected by the feature amount correction unit, approximates a representative value of a feature amount vector regarding the adjustment data more than a representative value before the feature amount vector is corrected.

4. The integrated model generation method according to any one of claims 1 to 3, wherein
the input data is image data obtained by capturing an image of a target, and
the specific feature is a categorized feature that exhibits an individual difference in external appearance of the target.

5. The integrated model generation method according to any one of claims 1 to 4, wherein
each of the plurality of classes related to output of the integrated model is a class corresponding to a quality level of a target.

6. The integrated model generation method according to any one of claims 1 to 5, wherein
the plurality of first element models each further outputs a location at which the specific feature is present.

7. An image inspection system comprising:
a first element model access unit configured to access a plurality of first element models, subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models being different from each other in the specific feature;
a second element model generation unit configured to generate a second element model by adjusting at least one of the plurality of first element models to adapt to adjustment data different from training data used for training the at least one of the plurality of first element models;
a selection unit configured to receive a specification of a plurality of element models, the plurality of element models being selected from a set of element models including the plurality of first element models and the second element model, and the plurality of element models including at least one of the second element models and at least one of the plurality of element models other than the at least one of the plurality of first element models which is a basis for generating the at least one second element model;
an integrated model generation unit configured to generate an integrated model by integrating the plurality of element models selected, the integrated model outputting a determination result as to whether the target of the image data input to the integrated model is a non-defective item;
an image acquisition unit configured to acquire target image data obtained by capturing an image of the target to be inspected; and
an inspection execution unit configured to obtain a determination result as to whether the target is a non-defective item by inputting the target image data acquired to the integrated model and executing the integrated model.

8. The image inspection system according to claim 7, wherein
the second element model generation unit generates the second element model by adjusting, through machine learning by using the adjustment data, the at least one of the plurality of first element models which is a basis for generating the at least one second element model.

9. The image inspection system according to claim 7, wherein
a first element model of the at least one of the plurality of first element models adjusted to generate the at least one second element model includes
a plurality of feature extraction units,
a feature amount correction unit configured to correct a feature amount vector of which element is a feature amount output by each of the plurality of feature extraction units, and
an identification unit configured to calculate an analysis result related to whether the specific feature related to the first element model is included, based on the feature amount vector corrected by the feature amount correction unit, and
the second element model generation unit generates the second element model by setting an amount of correction performed by the feature amount correction unit such that a representative value of the feature amount vector regarding training data used for training the first element model , after the feature amount vector is corrected by the feature amount correction unit, approximates a representative value of a feature amount vector regarding the adjustment data more than a representative value before the feature amount vector is corrected.

10. The image inspection system according to any one of claims 7 to 9, further comprising
a specification unit configured to receive a specification as to whether the specific feature to be analyzed by an element model of the plurality of element models selected is a non-defective item feature or a defective item feature, wherein
when the integrated model generation unit integrates element models of the plurality of element models that analyze the specific feature specified as the non-defective item feature, the integration is performed so as to prompt the integrated model to output a determination result determining that the target is a non-defective item, and when the integrated model generation unit integrates element models of the plurality of element models that analyze the specific feature specified as the defective item feature, the integration is performed so as to prompt the integrated model to output a determination result determining that the target is a defective item.

11. The image inspection system according to any one of claims 7 to 9, further comprising
a candidate model presentation unit configured to present, as a candidate of one of the plurality of element models to be selected, a first element model or the second element model obtained by adjusting the first element model, the first element model being any of the plurality of first element models accessible by the first element model access unit and performing output related to the specific feature being included when the image data being a sample of the target image data is analyzed.

12. The image inspection system according to any one of claims 7 to 9, further comprising
an improvement measure presentation unit configured to present a model improvement measure including any of changing selection of the plurality of element models for creating the integrated model, changing the training data for performing machine learning of the plurality of first element models, changing the adjustment of the second element model, and changing a determination criterion in the integrated model, based on the target image data for which an incorrect determination is made in the inspection execution unit.

13. The image inspection system according to claim 8, further comprising
an improvement measure presentation unit configured to present an improvement measure of including an image data for which an analysis result related to the specific feature being included is output by an element model of the plurality of element models different from a certain element model of the plurality of element models to be adjusted, as an image data not including the specific feature related to the certain element model to be adjusted, in the adjustment data for adjusting the certain element model to be adjusted.

14. The image inspection system according to any one of claims 7 to 9, further comprising
an image data presentation unit configured to present, based on the target image data for which an incorrect determination is made in the inspection execution unit, comparison image data including a feature similar to a certain feature included in the target image data, from among pieces of training image data used for machine learning of a first element model of the plurality of first element models or pieces of the image data generated so as to include a specific feature related to the first element model.

15. The image inspection system according to any one of claims 7 to 9, further comprising
an image data presentation unit configured to receive a specification of the target image data and present previous comparison image data including a feature similar to a certain feature included in the target image data specified, from among pieces of training image data used for machine learning of a first element model of the plurality of first element models or pieces of the image data generated to include a specific feature related to the first element model.

16. The image inspection system according to any one of claims 7 to 9, further comprising
a generated model storage unit configured to store in a storage medium at least one of the second element model or the integrated model generated, the storage medium being capable of retaining memory until the at least one of the second element model or the integrated model being generated is reused.

17. The image inspection system according to any one of claims 7 to 9, further comprising
an access permission unit configured to receive input of identification data or attribute data of a user who wants access and determine a range of design data within which the access is permitted according to the identification data or the attribute data, a set of pieces of the design data including at least one of data for specifying the plurality of element models integrated into the integrated model, data for specifying the training data used for training a first element model of the plurality of first element models being accessible, data for adjusting the first element model for the second element model, or data for integrating the plurality of element models into the integrated model.

18. An image inspection model generation device comprising:
a first element model access unit configured to access a plurality of first element models, subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models being different from each other in the specific feature;
a second element model generation unit configured to generate a second element model by adjusting at least one of the plurality of first element models to adapt to adjustment data different from training data used for training the at least one of the plurality of first element models;
a selection unit configured to receive a specification of a plurality of element models, the plurality of element models being selected from a set of element models including the plurality of first element models and the second element model, and the plurality of element models including at least one of the second element models and at least one of the plurality of element models other than the at least one of the plurality of first element models which is a basis for generating the at least one second element model; and
an integrated model generation unit configured to generate an integrated model by integrating the plurality of element models selected, the integrated model outputting a determination result as to whether the target of the image data input to the integrated model is a defective item.

19. An image inspection model generation program causing a computer to perform:
accessing a plurality of first element models, subjected to machine learning, for receiving input of image data obtained by capturing an image of a target and outputting presence or absence of a specific feature in the image data or a likelihood of the presence or the absence, the specific feature being a categorized feature that exhibits an individual difference in external appearance of the target, different ones of the plurality of first element models being different from each other in the specific feature;
generating a second element model by adjusting at least one of the plurality of first element models to adapt to adjustment data different from training data used for training the at least one of the plurality of first element models;
receiving a specification of a plurality of element models, the plurality of element models being selected from a set of element models including the plurality of first element models and the second element model, and the plurality of element models including at least one of the second element models and at least one of the plurality of element models other than the at least one of the plurality of first element models which is a basis for generating the at least one second element model; and
generating an integrated model by integrating the plurality of element models selected, the integrated model outputting a determination result as to whether the target of the image data input to the integrated model is a defective item.

20. An image inspection device comprising:
an integrated model generated by the integrated model generation method according to claim 5;
an image acquisition unit configured to acquire target image data obtained by capturing an image of a target to be inspected; and
an inspection execution unit configured to obtain a determination result as to whether the target is a non-defective item by inputting the target image data acquired to the integrated model and executing the integrated model.
